# FASCICULE DE BREVET EUROPEEN

(11) **EP 2 227 080 B1**
(45) Date de publication et mention de la délivrance du brevet: **08.01.2020**
(21) Numéro de dépôt: 08853932.5
(22) Date de dépôt: 05.11.2008
(51) Int. Cl.: A01G 31/00, E04D 11/00

(54) **SUBSTRAT DE CULTURE À ARROSAGE INTEGRÉ**
KULTURSUBSTRAT MIT INTEGRIERTER BEWÄSSERUNG
CULTIVATION SUBSTRATE WITH INTEGRATED IRRIGATION

(30) Priorité: 05.11.2007 FR 0707764
(43) Date de publication de la demande: 15.09.2010
(73) Titulaire: Vertige International, 33150 Cenon (FR)
(72) Inventeur: DEMGUILHEM, Stéphane, 33360 Quinsac (FR)
(74) Mandataire: Aquinov
(86) Numéro de dépôt international: PCT/FR2008/052001
(87) Numéro de publication internationale: WO 2009/068788

(56) Documents cités:
- EP-A- 0 677 242
- EP-A- 0 730 821
- DE-A1- 3 636 771
- DE-A1- 19 629 669

## Description

La présente invention concerne un substrat de culture à arrosage intégré. L'industrie est à la recherche de substrat pour la culture de plantes dans des applications particulières comme les cultures en terrasse dite végétalisation en toiture.

Il est nécessaire que ces substrats répondent à de nombreuses contraintes.

En effet, il est difficile de prévoir des substrats tels que de la terre pour des questions notamment de livraison quand il s'agit d'une terrasse au 17^{eme} étage d'un immeuble.

De plus, il faut impérativement que le milieu de culture soit drainant afin d'évacuer les excès d'eau dus aux précipitations. Ces eaux en excès sont alors évacuées vers le réseau d'eaux pluviales et on comprend aussi que la terre ne conviendrait pas comme substrat car il faudrait aussi filtrer l'eau pour éviter l'entraînement d'une partie de la terre.

De plus un substrat comme de la terre ne permettrait ni d'obtenir la cohésion nécessaire à une mise en place aisée et rapide, ni d'atteindre la longévité recherchée.

Sous l'action de fortes précipitations, il est nécessaire que le substrat maintienne une certaine cohésion car il faut que les plantes qui y ont raciné soient maintenues. Ce besoin est une obligation dans le cas où le support est une toiture avec une déclivité car tout support pulvérulent serait immédiatement entraîné.

Enfin, en cas de problème d'étanchéité, il faut pouvoir accéder aisément à la toiture, ce qui reste difficile dans le cas d'un produit pulvérulent comme la terre.

Il est à noter aussi que l'épaisseur du substrat doit être de hauteur réduite pour autoriser une manipulation aisé.

Il est nécessaire aussi de limiter la rétention d'eau pour ne pas augmenter la charge du toit de façon excessive.

A l'opposé, lorsqu'il y a exposition à la chaleur, il est nécessaire de pouvoir procéder à un arrosage du substrat, voire de fournir des compléments nutritifs. Or il est impératif que cet arrosage soit intégré et puisse être piloté automatiquement.

Pour l'usager il s'agit d'améliorer l'isolation phonique et thermique tant en chaud qu'en froid, c'est-à-dire une régulation des pièces sous toiture.

Ceci est donc assimilable à la construction et non à un jardin d'agrément auquel la notion de plaisir est liée.

Il faut limiter l'entretien au strict nécessaire. Les variétés végétales aptes à de telles applications sont parfaitement connues, comme le sédum, voire des espèces fleuries mais sans nécessiter des tontes et autres interventions contraignantes.

Le substrat de culture de ces plantes doit être aussi sans entretien pour l'usager et d'une grande longévité.

Pour que cette application retienne l'attention des usagers, il faut que les professionnels de la végétalisation disposent d'un substrat qui soit prêt à poser et industriel dans sa production.

Ceci induit de disposer d'un substrat avec les propriétés mécaniques et de résistance au délitement requises, qui se manipule aisément et notamment qui puisse être mis en rouleaux.

Le substrat doit aussi pouvoir être produit en grande quantité d'une part et à un prix compétitif, sans rupture d'approvisionnement. Ceci exclut donc les produits issus de plantes vivantes qui, une fois morte, seraient aptes à former un substrat : il faut pouvoir produire industriellement pur répondre à la demande dans des délais adaptés et non avec des cycles de plusieurs mois.

Néanmoins, le matériau utilisé pour la présente invention reste de préférence d'origine végétale tout en présentant une résistance au feu suffisante ce qui n'est pas le cas des substrats obtenus à partir de racines de plantes naturelles cultivées à cet effet qui sont très inflammables.

Le substrat selon la présente invention vise à répondre à l'ensemble des contraintes et problèmes ci-dessus évoqués.

A cet effet, le substrat selon la présente invention est maintenant décrit selon un mode de réalisation particulier, non limitatif, description effectuée en regard des dessins annexés sur lesquels les différentes figures représentent :
- figure 1: une vue en perspective éclatée d'un mode de réalisation du substrat selon l'invention, et
- figure 2 : une vue en coupe transversale du substrat selon la présente invention.

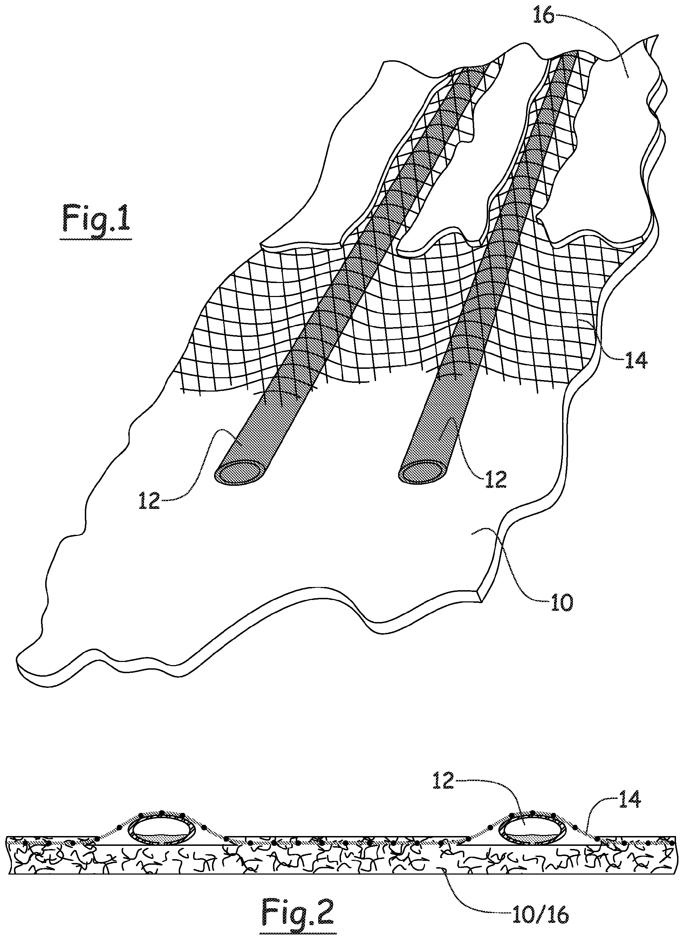

Sur la figure 1, on a représenté un substrat selon la présente invention qui comprend une première nappe 10 en matériau végétal, au moins un conduit 12 d'alimentation en fluide, une nappe 14 de renfort et de maintien des conduits ainsi qu'une seconde nappe 16 en matériau végétal.

Cette représentation a été faite pour les besoins de la description mais le substrat selon l'invention se trouve sous forme d'un tapis monolithique avec tous les éléments intégrés dont la coupe est montrée sur la figure 2.

La réalisation consiste à déposer une première couche de fibres végétales, en l'occurrence des fibres de chanvre.

Sur cette première couche, on dépose des conduits 12 d'alimentation en fluide, en l'occurrence des tubes en matériau polymère recyclable comme du polyéthylène.

Ces conduits sont avantageusement de section elliptique afin de permettre un écrasement suivant le plus grand diamètre, de façon naturelle, comme il sera expliqué plus avant.

Ce conduits 12 sont perforés avec des trous de diamètre donné et répartis suivant une génératrice à des intervalles déterminés, ceci en fonction des besoins de débit de goutte à goutte nécessaire. Une telle détermination est à la paortée de l'homme de l'art en fonction des variété végétales à venir sur ce substrat, du climat, de la densité de plantes, de l'exposition etc....

Ces conduits sont disposés en des emplacements parfaitement déterminés sur la première couche.

La nappe 14 de renfort et de maintien est disposée sur les conduits 1 et sur la première couche. Une telle nappe est un filet.

Dans le cas d'un maillage à 90°, l'orientation des mailles est avantageusement positionnée à 45° par rapport à l'axe longitudinal des conduits de façon à permettre un maintien amélioré.

Sur cet ensemble, il est déposé une seconde couche de fibres végétales, a priori de même nature que la première couche, à savoir du chanvre.

Cette seconde couche évite la zone des conduits qui sont exempts de fibres végétales.

De fait les conduits sont uniquement recouverts de la nappe de renfort et de maintien.

Ensuite les fibres des deux couches sont intimement liées entre elles et un moyen adapté est une opération de cardage.

Ainsi les fibres des deux couches s'interpénétrent et assurent une cohésion totale.

De fait la nappe de renfort et de maintien est intégrée dans ce tapis monolithique.

Du type de cardage dépend la cohésion mais les propriétés mécaniques obtenues sont très élevées et notamment la résistance au délitement est très importante même si les fibres baignent dans l'eau car l'enchevêtrement est suffisant.

Le cardage est obtenu par passage traversant d'aiguilles d'une face à l'autre. C'est pour ne pas perforer les conduits 12 que le cardage n'est pas conduit dans cette zone.

De façon préférentielle, on réalise la première nappe de fibres végétales qui est cardé par ailleurs.

On rapporte les conduits sur cette nappe, on rapporte simultanément la nappe de renfort et de maintien et on rapporte des secondes nappes entre les conduits de part et d'autre.

Cette superposition est cardée de nouveau afin d'obtenir le tapis monolithique recherché, en dehors des conduits comme précédemment afin de ne pas les perforer.

Le chanvre est retenu pour ses propriétés de résistance au feu car il est peu combustible surtout sous forme cardé serré.

De plus, il a des capacités adaptées de retenue d'eau, 5 à 6 fois son poids en eau. Un substrat selon l'invention pèse sensiblement 4 à 5 kilos au m², à saturation d'eau.

On peut réaliser des bandes de 700 mm de large avec une épaisseur de 7 mm pour un poids de 800g/m².

La production de chanvre est telle que l'approvisionnement ne pose pas de problèmes, quel que soit le pays, quelle que soit la saison et reste indépendante des intempéries.

Le coût du produit fini est bien inférieur à celui obtenu directement à partir de cultures.

La production engendre des délais de production industrielle compté en jours et non en mois.

Les propriétés mécaniques sont suffisantes pour assurer une pose sur des toits en pente jusqu'à 30°.

Le substrat ainsi réalisé peut être mis en forme de rouleaux car les gaines se mettent à plat. Elles sont parfaitement maintenues en place et sont parfaitement positionnées lors du déroulage, même en cas de forte pente.

Pour la culture, on peut envisager deux solutions.

La première consiste à dérouler le substrat et à disposer des plaques de plants pré cultivés sur le substrat et à laisser raciner.

La seconde solution consiste à produire directement des plants sur le substrat selon l'invention et à le faire développer sur le substrat dans lequel il va raciner. L'inconvénient de cette solution est essentiellement d'ordre esthétique car il faut attendre un certain développement de ces plants avant d'avoir une couverture de la surface du substrat.

L'arrosage est avantageusement piloté en automatique avec une sonde hydrométrique qui déclenche l'alimentation des conduits en eau voire en eau additionnée de compléments nutritifs, au moins en début de mise en place.

## Revendications

1. Substrat de culture à arrosage intégré, notamment pour la végétalisation de toitures, le substrat comprenant une première nappe (10) en fibres de matériau végétal, au moins un conduit (12) d'alimentation en fluide, une nappe (14) de renfort et de maintien du au moins un conduit ainsi qu'une seconde nappe (16) en fibres de matériau végétal, les première et seconde nappes (10, 16) étant liées par cardage ; **caractérisé en ce que** la nappe de renfort et de maintien est un filet.

2. Substrat de culture à arrosage intégré selon la revendication 1, **caractérisé en ce que** le la seconde nappe (16) est déposée de part et d'autre de chaque conduit.

3. Substrat de culture à arrosage intégré selon la revendication 1 ou 2, **caractérisé en ce que** les fibres de matériau végétal sont des fibres de chanvre.

4. Substrat de culture à arrosage intégré selon l'une quelconque des revendications précédentes, **caractérisé en ce que** les conduits ont une section de forme elliptique.

## Patentansprüche

1. Pflanzsubstrat mit integrierter Bewässerung, insbesondere für die Dachbegrünung, wobei das Substrat eine erste Schicht (10) aus Pflanzenfasern, mindestens eine Versorgungsleitung (12) für Flüssigkeiten, eine Verstärkungs- und Stützschicht (14) für die mindestens eine Leitung sowie eine zweite Schicht (16) aus Pflanzenfasern umfasst, wobei die erste und zweite Schicht (10, 16) durch Kardieren miteinander verbunden sind, **dadurch gekennzeichnet, dass** die Verstärkungs- und Stützschicht ein Netz ist.

2. Pflanzsubstrat mit integrierter Bewässerung nach Anspruch 1, **dadurch gekennzeichnet, dass** die zweite Schicht (16) beidseitig jeder Leitung angebracht ist.

3. Pflanzsubstrat mit integrierter Bewässerung nach Anspruch 1 oder 2, **dadurch gekennzeichnet, dass** es sich bei den Pflanzenfasern um Hanffasern handelt.

4. Pflanzsubstrat mit integrierter Bewässerung nach einem der vorausgehenden Ansprüche, **dadurch gekennzeichnet, dass** die Leitungen einen elliptischen Querschnitt aufweisen.

## Claims

1. A cultivation substrate with integrated irrigation, in particular for planting roofs, the substrate comprising a first layer (10) of plant-material fibres, at least one fluid-supply pipe (12), a layer (14) for reinforcing and holding said at least one pipe, and a second layer (16) of plant-material fibres, the first and second layers (10, 16) being connected by carding; **characterised in that** the reinforcing and holding layer is a net.

2. A cultivation substrate with integrated irrigation according to claim 1, **characterised in that** the second layer (16) is deposited on either side of each pipe.

3. A cultivation substrate with integrated irrigation according to claim 1 or 2, **characterised in that** the plant-material fibres are hemp fibres.

4. A cultivation substrate with integrated irrigation according to any of the preceding claims, **characterised in that** the pipes have an elliptically shaped cross section.
